# EUROPEAN PATENT SPECIFICATION

(11) **EP 1 187 528 B1**
(45) Date of publication and mention of the grant of the patent: **21.04.2004**
(21) Application number: 01910224.3
(22) Date of filing: 05.02.2001
(51) Int. Cl.: A01J 5/04, A01J 5/017

(54) **A DEVICE FOR TAKING A MILK SAMPLE**
VORRICHTUNG ZUM ENTNEHMEN EINER MILCHPROBE
DISPOSITIF PERMETTANT DE PRELEVER UN ECHANTILLON DE LAIT

(30) Priority: 28.02.2000 NL 1014507
(43) Date of publication of application: 20.03.2002
(73) Proprietor: Lely Enterprises AG, 6300 ZUG (CH)
(72) Inventor: VAN DER LELY, Alexander, NL-3065 NA Rotterdam (NL); FRANSEN, René, NL-3135 ZD Vlaardingen (NL)
(74) Representative: Corten, Maurice Jean F.M.
(86) International application number: PCT/NL2001/000094
(87) International publication number: WO 2001/064026

(56) References cited:
- EP-A- 0 564 023
- GB-A- 2 239 233

## Description

The invention relates to a device as described in the preamble of claim 1.

Such a device is known from the document GB 2 239 233.

The invention aims at improving such a device.

According to the invention this is achieved in that the device comprises switch means with the aid of which cooling means for cooling a sample liquid taken by the first milk sampling device are activated automatically or manually. Due to the fact that the sample liquid is cooled, the liquid can be stored longer without the quality of the liquid being affected. This is in particular of importance when the milk sampling device is linked with a milking robot for automatically milking animals, as it usually takes considerable time before the milk from the entire herd has been sampled, due to the fact that the animals determine themselves when they are milked. According to a further inventive feature, the switch means comprise end control means with the aid of which the switch means are activated and as a result of which the cooling means or possibly further cooling means for at least one further milk sampling device are activated. With the aid of the switch means it is thus possible to activate the cooling of one or more further milk sampling devices. According to an inventive feature, the end control means comprise an end switch. According to again another inventive feature, the end switch actuates a shut-off valve with the aid of which the cooling is activated and/or stopped. In a first embodiment of the invention the end switch is controlled mechanically. In a second embodiment of the invention the end control means comprise a counter, preferably an electronic or mechanical counter, that actuates the end switch. According to a further embodiment of the invention, the end control means comprise a time switch that actuates the end switch. According to another inventive feature, the counter and/or the time switch are adjustable. This makes it possible to start cooling before a sample is taken by means of the milk sampling device.

The invention also relates to an implement for milking animals, such as cows, which is provided with a milking robot for automatically connecting teat cups to the teats of an animal to be milked, and which is also provided with a device for taking a milk sample as described above.

The invention will now be explained in further detail with reference to the accompanying figures in which:
Figure 1 is a plan view of a milk box with a milking robot and a device according to the invention;
Figure 2 shows a first embodiment of the device according to the invention;
Figure 3 shows a second embodiment of the device according to the invention, and
Figure 4 shows a third embodiment of the device according to the invention.

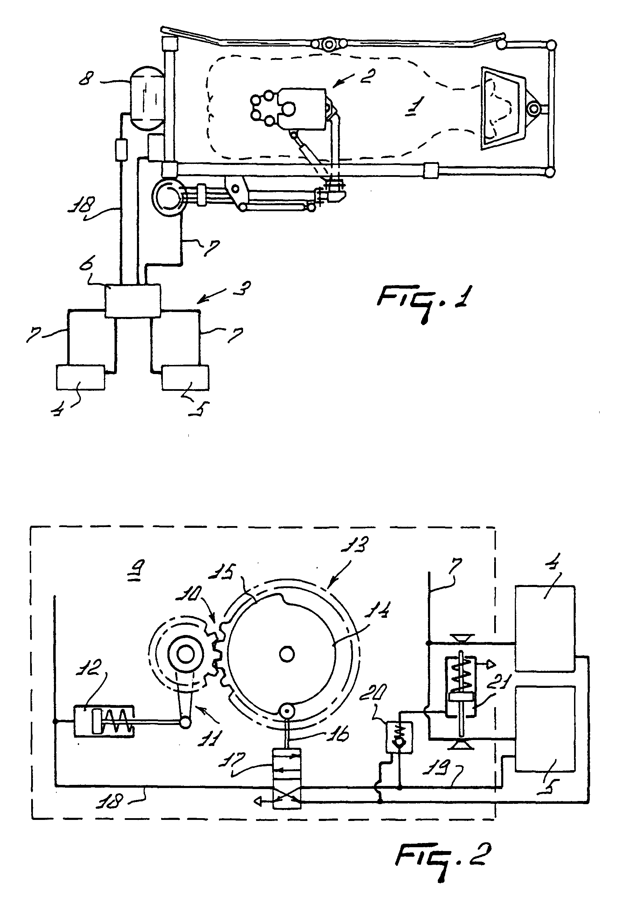

Figure 1 is a plan view of a milk box 1 with a milking robot 2 and a device 3 for taking a milk sample. The device 3 is provided with a first milk sampling device 4 and a second milk sampling device 5. The device 3 further comprises switch means 6 with the aid of which the supply of a sample liquid via supply lines 7 can be switched automatically from the first milk sampling device 4 to a second milk sampling device 5 or vice versa. With the aid of the switch means 6 it is also possible to activate or to stop cooling means 8 for cooling the first and second milk sampling device 4, 5. In the present embodiment the cooling means 8 are constituted by an air unit. However, it will be obvious that the cooling means 8 may also comprise an other type of cooling, such as e.g. a heat exchanger.

Figure 2 shows a diagram of the switch means 6 with the aid of which the supply of a sample liquid is switched automatically from the first milk sampling device 4 to the second milk sampling device 5. For that purpose the switch means 6 comprise end control means 9 which comprise a gear control 10 in the first embodiment. The gear control 10 is provided with a pawl construction 11 which is actuated by a first cylinder 12. In the present embodiment the first cylinder 12 is designed as a single-acting pneumatic cylinder with a drawback spring. The first cylinder 12 is actuated in a pulsating manner. The pulsation frequency is then equal to the frequency with which sampling takes place. So each time when a sample is taken the first cylinder 12 is activated. The pawl construction 11 further comprises a rotatable plate 13 which comprises a first sector 14 and a second sector 15. The plate 13 actuates a valve 17 via a pin 16. In the present embodiment the valve 17 is designed as a two-way valve. Just like the first cylinder 12, the valve 17 is connected, via a line 18, to a cooling system in the form of a compressed air unit 8 which also serves for cooling the two milk sampling devices 4, 5. The milk sampling devices 4, 5 are cooled via the lines 19. The valve 17 is connected to a shut-off valve 21 via the lines through a non-return valve 20 included therein. In the present embodiment the shut-off valve 21 is designed, just like the first cylinder 12, as a single-acting pneumatic cylinder with a drawback spring. However, it will be obvious that also any other type of shut-off valve with a similar function may be used. Depending on the position of the valve 17, the shut-off valve 21 shuts off the supply line 7 to one of the milk sampling devices 4, 5. As shown in Figure 2, the supply of sample liquid via the supply line 7 to the second milk sampling device 5 is shut off. However, when a new sample is taken the plate 13 will rotate, as a result of which the pin 16 is pressed, whereupon the valve 17 is controlled, so that the shut-off valve 21 is activated, as a result of which the supply of sample liquid to the first milk sampling device 4 is shut off and the supply to the second milk sampling device 5 is released. At that moment also the cooling of the first milk sampling device 4 is switched off and that of the second milk sampling device 5 is switched on.

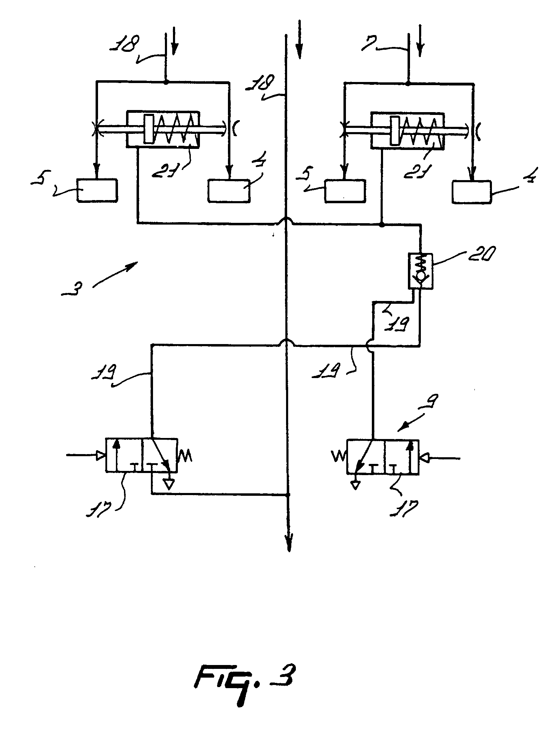

Figure 3 shows a second embodiment of a device 3 according to the invention, in which parts corresponding to those of the embodiment of Figure 2 are indicated by the same reference numerals. The device 3 according to the second embodiment also comprises control means 9 which are designed as two valves 17 in the present embodiment. At the moment when the last sample has been taken by the first milk sampling device, the left hand valve 17 in Figure 3 is automatically controlled. This may be effected mechanically or electronically. Via the line 18 compressed air then flows to the line 19 through the non-return valve 20 to the shut-off valves 21. The two shut-off valves 21 are controlled at the same time. The left hand shut-off valve 21 ensures that the cooling of the first milk sampling device 4 is switched off and that of the second milk sampling device 5 is switched on, while the right hand shut-off valve ensures that the supply line 7 for the sample liquid to the first milk sampling device 4 is shut off and that to the second milk sampling device 5 is opened. The non-return valve ensures that the shut-off valves 21 remain in their newly assumed position. When the last sample has been taken by the second milk sampling device 5, the right hand valve 17 is controlled automatically, as a result of which the line 19, which is in connection with the non-return valve 20, de-aerates the lines to the shut-off valves 21, as a result of which the latter ensure under spring action that the supply lines of both the cooling medium and the sample liquid to the second milk sampling device 5 are shut and those to the first milk sampling device 4 are opened.

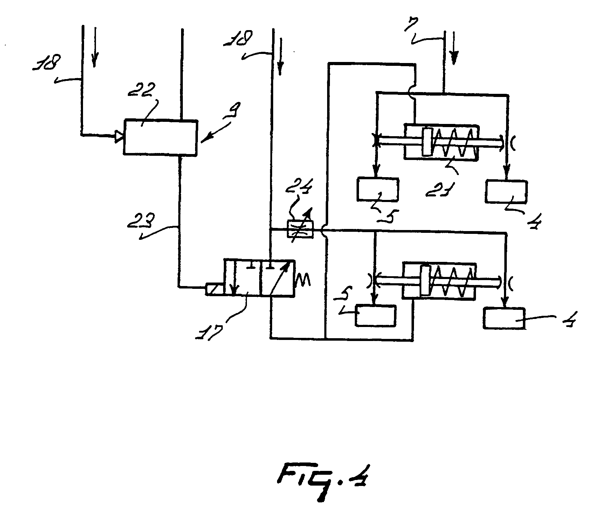

Figure 4 shows a third embodiment of the device according to the invention, in which parts corresponding to those of the first and second embodiment of the invention are indicated by the same reference numerals. The device 3 according to the third embodiment also comprises end control means 9 which comprise e.g. an electronic counter 22 in the present embodiment. However, it will be obvious that this may also be a mechanical counter. With the aid of the electronic counter 22 it is recorded how many samples have been taken by a particular milk sampling device. This takes place on the basis of the air pulses which are supplied to the electronic counter 22 via the line 18. If a pre-set amount of samples has been taken, the electronic counter 22 supplies a signal to the valve 17 via a line 23. In this manner air can flow via the line 18 through the valve 17, as a result of which the shut-off valves 21 are controlled, in such a manner that the supply of the cooling medium and the sample liquid is switched from the first milk sampling device 4 to the second milk sampling device 5. Due to the fact that a throttle valve 24 is included in the line 18, it is possible not to switch off the cooling of a milk sampling device completely, but for e.g. 80%. In a preferred embodiment of the invention the throttle valve 24 is adjustable, so that the cooling capacity can be adjusted per milk sampling device.

## Claims

1. A device (3) for taking a milk sample, provided with a first milk sampling device (4), **characterized in that** the device (3) comprises switch means (6) with the aid of which cooling means (8) for cooling a sample liquid taken by the first milk sampling device (4) are activated automatically or manually.

2. A device as claimed in claim 1, **characterized in that** the switch means (6) comprise end control means (9) with the aid of which the switch means (6) are activated and as a result of which the cooling means (8) or further cooling means for at least one further milk sampling device (5) are activated.

3. A device as claimed in claim 2, **characterized in that** the end control means (9) comprise an end switch.

4. A device as claimed in claim 3, **characterized in that** the end switch actuates a shut-off valve (21) with the aid of which the cooling is activated and/or stopped.

5. A device as claimed in claim 3 or 4, **characterized in that** the end switch is controlled mechanically.

6. A device as claimed in any one of claims 2 to 5, **characterized in that** the end control means (9) comprise a counter (22), preferably an electronic or mechanical counter, that actuates the end switch.

7. A device as claimed in any one of claims 2 to 5, **characterized in that** the end control means (9) comprise a time switch that actuates the end switch.

8. A device as claimed in claim 6 or 7, **characterized in that** the counter (22) and/or the time switch are adjustable.

9. A device as claimed in any one of the preceding claims, **characterized in that** the cooling means (8) and/or the further cooling means comprise a compressed air unit.

10. A device as claimed in any one of the preceding claims, **characterized in that** the cooling means (8) and/or the further cooling means comprise a Peltier element.

11. A device as claimed in claim 9 or 10, **characterized in that** the device comprises adjusting means, such as e.g. a thermostat or a pressure reducing valve, with the aid of which the cooling capacity and/or the cooling temperature can be adjusted.

12. A device as claimed in any one of the preceding claims, **characterized in that**, with the aid of the switch means (6), there are automatically actuated further means, such as e.g. registration means for registering the milk samples and/or control means for controlling further functions of the milk sampling device (4, 5) and/or means with the aid of which the supply of a sample liquid can be switched from a first milk sampling device (4) to a further milk sampling device (5) or vice versa.

13. An implement for milking animals, such as cows, which is provided with a milking robot (2) for automatically connecting teat cups to the teats of an animal to be milked, and which is also provided with a device for taking a milk sample as described in any one of claims 1 to 8.

## Patentansprüche

1. Einrichtung (3) zur Entnahme einer Milchprobe, die mit einer ersten Milchproben-Entnahmevorrichtung (4) versehen ist,
**dadurch gekennzeichnet, daß** die Einrichtung (3) eine Schaltvorrichtung (6) umfaßt, mittels der eine Kühlvorrichtung (8) zum Kühlen einer von der ersten Milchproben-Entnahmevorrichtung (4) entnommenen Probenflüssigkeit automatisch oder manuell aktiviert wird.

2. Einrichtung nach Anspruch 1,
**dadurch gekennzeichnet, daß** die Schaltvorrichtung (6) eine endseitige Steuervorrichtung (9) umfaßt, mittels der die Schaltvorrichtung (6) aktiviert wird und als Folge davon die Kühlvorrichtung (8) oder eine weitere Kühlvorrichtung für mindestens eine weitere Milchproben-Entnahmevorrichtung (5) aktiviert wird.

3. Einrichtung nach Anspruch 2,
**dadurch gekennzeichnet, daß** die endseitige Steuervorrichtung (9) einen Endschalter umfaßt.

4. Einrichtung nach Anspruch 3,
**dadurch gekennzeichnet, daß** der Endschalter ein Absperrventil (21) betätigt, mittels dessen die Kühlung aktiviert und/oder abgeschaltet wird.

5. Einrichtung nach Anspruch 3 oder 4,
**dadurch gekennzeichnet, daß** der Endschalter mechanisch gesteuert wird.

6. Einrichtung nach einem der Ansprüche 2 bis 5,
**dadurch gekennzeichnet, daß** die endseitige Steuervorrichtung (9) einen Zähler (22), vorzugsweise einen elektronischen oder mechanischen Zähler, umfaßt, der den Endschalter betätigt.

7. Einrichtung nach einem der Ansprüche 2 bis 5,
**dadurch gekennzeichnet, daß** die endseitige Steuervorrichtung (9) einen Zeitschalter umfaßt, der den Endschalter betätigt.

8. Einrichtung nach Anspruch 6 oder 7,
**dadurch gekennzeichnet, daß** der Zähler (22) und/oder der Zeitschalter einstellbar sind.

9. Einrichtung nach einem der vorhergehenden Ansprüche,
**dadurch gekennzeichnet, daß** die Kühlvorrichtung (8) und/oder die weitere Kühlvorrichtung eine Drucklufteinheit umfaßt.

10. Einrichtung nach einem der vorhergehenden Ansprüche,
**dadurch gekennzeichnet, daß** die Kühlvorrichtung (8) und/oder die weitere Kühlvorrichtung ein Peltier-Element umfaßt.

11. Einrichtung nach Anspruch 9 oder 10,
**dadurch gekennzeichnet, daß** die Einrichtung eine Stellvorrichtung, wie z. B. einen Thermostaten oder ein Druckminderventil, umfaßt, mittels dessen die Kühlkapazität und/oder die Kühltemperatur eingestellt werden kann.

12. Einrichtung nach einem der vorhergehenden Ansprüche,
**dadurch gekennzeichnet, daß** mit Hilfe der Schaltvorrichtung (6) automatisch weitere Vorrichtungen betätigt werden, wie z. B. eine Registriervorrichtung zum Registrieren der Milchproben und/oder eine Steuervorrichtung zum Steuern weiterer Funktionen der Milchproben-Entnahmevorrichtung (4, 5) und/oder eine Vorrichtung, mittels der die Zufuhr einer Probenflüssigkeit von einer ersten Milchproben-Entnahmevorrichtung (4) zu einer weiteren Milchproben-Entnahmevorrichtung (5) oder umgekehrt umgeschaltet werden kann.

13. Vorrichtung zum Melken von Tieren, wie z. B. Kühen, die mit einem Melkroboter (2) zum automatischen Anschließen von Zitzenbechern an die Zitzen eines zu melkenden Tieres und auch mit einer Einrichtung zur Entnahme einer Milchprobe versehen ist, wie sie in einem der Ansprüche 1 bis 8 beschrieben ist.

## Revendications

1. Dispositif (3) pour prélever un échantillon de lait, muni d'un premier dispositif d'échantillonnage de lait (4), **caractérisé en ce que** le dispositif (3) comprend des moyens formant commutateur (6) avec l'aide desquels des moyens de refroidissement (8) pour refroidir un échantillon de liquide prélevé par le premier dispositif d'échantillonnage de lait (4) sont activés automatiquement ou manuellement.

2. Dispositif selon la revendication 1, **caractérisé en ce que** les moyens formant commutateur (6) comprennent des moyens de contrôle final (9) avec l'aide desquels les moyens formant commutateur (6) sont activés et à cause desquels les moyens de refroidissement (8) ou des moyens de refroidissement supplémentaires pour au moins un dispositif d'échantillonnage de lait supplémentaire (5) sont activés.

3. Dispositif selon la revendication 2, **caractérisé en ce que** les moyens de contrôle final (9) comprennent un commutateur final.

4. Dispositif selon la revendication 3, **caractérisé en ce que** le commutateur final actionne une vanne de coupure (21) avec l'aide de laquelle le refroidissement est activé et/ou arrêté.

5. Dispositif selon la revendication 3 ou 4, **caractérisé en ce que** le commutateur final est contrôlé mécaniquement.

6. Dispositif selon l'une quelconque des revendications 2 à 5, **caractérisé en ce que** les moyens de contrôle final (9) comprennent un compteur (22), de préférence un compteur électronique ou mécanique, qui actionne le commutateur final.

7. Dispositif selon l'une quelconque des revendications 2 à 5, **caractérisé en ce que** les moyens de contrôle final (9) comprennent un programmateur qui actionne le commutateur final.

8. Dispositif selon la revendication 6 ou 7, **caractérisé en ce que** le compteur (22) et/ou le programmateur sont réglables.

9. Dispositif selon l'une quelconque des revendications précédentes, **caractérisé en ce que** les moyens de refroidissement (8) et/ou les moyens de refroidissement supplémentaires comprennent une unité d'air comprimé.

10. Dispositif selon l'une quelconque des revendications précédentes, **caractérisé en ce que** les moyens de refroidissement (8) et/ou les moyens de refroidissement supplémentaires comprennent un élément Peltier.

11. Dispositif selon la revendication 9 ou 10, **caractérisé en ce que** le dispositif comprend des moyens de réglage, tels que par exemple un thermostat ou une vanne de réduction de pression, avec l'aide desquels la capacité de refroidissement et/ou la température de refroidissement peuvent être réglées.

12. Dispositif selon l'une quelconque des revendications précédentes, **caractérisé en ce que**, avec l'aide des moyens formant commutateur (6), des moyens supplémentaires sont actionnés automatiquement, tels que par exemple des moyens d'enregistrement pour enregistrer les échantillons de lait et/ou des moyens de contrôle pour contrôler des fonctions supplémentaires du dispositif d'échantillonnage de lait (4, 5) et/ou des moyens avec l'aide desquels l'alimentation d'un liquide d'échantillon peut être commutée d'un premier dispositif d'échantillonnage de lait (4) à un dispositif d'échantillonnage de lait supplémentaire (5) ou vice versa.

13. Instrument pour traire des animaux, tels que des vaches, qui est muni d'un robot de traite (2) pour raccorder automatiquement des gobelets trayeurs aux trayons d'un animal à traire, et qui est aussi muni d'un dispositif pour prélever un échantillon de lait comme décrit selon l'une quelconque des revendications 1 à 8.
